# FASCICULE DE BREVET EUROPEEN

(11) **EP 2 974 649 B1**
(45) Date de publication et mention de la délivrance du brevet: **02.03.2022**
(21) Numéro de dépôt: 15170884.9
(22) Date de dépôt: 05.06.2015
(51) Int. Cl.: A61B 5/00, G01J 5/12

(54) **DISPOSITIF DE DÉTECTION DE RAYONNEMENT INFRAROUGE ET PROCÉDÉ DE DÉTERMINATION D'UNE INDICATION DE PRÉSENCE ET D'UNE INDICATION DE MOUVEMENT**
VORRICHTUNG ZUR ERFASSUNG VON INFRAROTSTRAHLEN, UND VERFAHREN ZUR BESTIMMUNG EINER PRÄSENZMELDUNG UND EINER BEWEGUNGSMELDUNG
DEVICE FOR DETECTING INFRARED RADIATION AND METHOD FOR DETERMINING AN INDICATION OF PRESENCE AND AN INDICATION OF MOVEMENT

(30) Priorité: 16.07.2014 FR 1456841
(43) Date de publication de la demande: 20.01.2016
(73) Titulaire: Legrand France, 87000 Limoges (FR); Legrand SNC, 87000 Limoges (FR)
(72) Inventeur: DORE, Pascal, 87000 Limoges (FR); GUETTARI, Toufik, 87000 Limoges (FR)
(74) Mandataire: Jacobacci Coralis Harle

(56) Documents cités:
- EP-A1- 1 619 342
- EP-B1- 0 476 138
- WO-A2-2007/052108
- WO-A2-2013/049748
- DE-A1- 19 710 946
- JP-A- 2009 236 751
- US-A1- 2013 310 662

## Description

### DOMAINE TECHNIQUE AUQUEL SE RAPPORTE L'INVENTION

La présente invention concerne la détection de présence et de mouvement à l'aide du rayonnement infrarouge émis par toute personne.

Elle concerne plus particulièrement un dispositif de détection de rayonnement infrarouge et un procédé de détermination d'une indication de présence et d'une indication de mouvement.

Elle trouve une application avantageuse pour la détection de présence ou de mouvement dans un lit, en particulier en milieu hospitalier ou dans un établissement d'hébergement pour personnes âgées dépendantes (EHPAD).

### ARRIERE-PLAN TECHNOLOGIQUE

Le document US 7 985 953 propose d'utiliser le rayonnement infrarouge émis par toute personne pour situer cette personne dans une pièce au moyen de détecteurs utilisant chacun une pluralité de thermocouples.

Ce document propose par exemple d'installer de tels détecteurs à différents endroits d'une pièce et de procéder par triangulation pour déterminer dans quelle partie de la pièce se situe la personne.

Comme le remarque le document, ce type de détecteur est avantageux notamment car il ne nécessite pas un mouvement de la personne dans la pièce pour permettre sa détection, comme c'est le cas pour d'autres capteurs.

On peut ainsi détecter la présence d'une personne même immobile.

La solution proposée utilise toutefois plusieurs détecteurs, comprenant eux-mêmes plusieurs thermocouples, et peut donc s'avérer trop complexe dans certaines applications, en particulier lorsque l'on souhaite réduire le coût du système de détection.

Le document JP2009236751 A divulgue la détection d'une présence basée sur les valeurs prises au cours du temps d'un seul capteur infrarouge.

Le document EP0476138B1 divulgue l'utilisation d'un unique capteur infrarouge pour détecter un mouvement.

### OBJET DE L'INVENTION

Dans ce contexte, la présente invention propose un dispositif selon la revendication 1. Le dispositif de détection de rayonnement infrarouge (sans contact) comprend un capteur thermique générant des signaux indicatifs d'une différence entre une température de référence et une température d'une partie exposée au rayonnement infrarouge, et un module de détermination d'une indication de présence et d'une indication de mouvement en fonction seulement d'une pluralité de valeurs de ladite différence relevées sur un intervalle de temps.

On obtient ainsi une indication de la présence et une indication du mouvement d'une personne (laquelle émet, du fait même de sa température corporelle, un rayonnement électromagnétique qui se situe dans l'infrarouge, de longueur d'onde centrée autour de 10 µm) sur la seule base de signaux générés par un unique capteur thermique (parfois dénommé pyromètre), par exemple un capteur à thermocouple. Ceci est rendu possible par l'utilisation de valeurs relevées au cours de l'intervalle de temps, utilisation qui va à l'inverse de l'avantage des capteurs à thermocouple classiquement mis en avant, à savoir la détection de présence à un instant donné, sans nécessité de mouvement, comme rappelé ci-dessus.

La détermination de l'indication de présence et de l'indication de mouvement est réalisée en fonction seulement desdites valeurs, ce qui signifie qu'aucune autre valeur mesurée n'est utilisée (mais ce qui n'exclut pas l'utilisation d'une valeur prédéterminée tel que le seuil prédéfini mentionné plus bas).

Un tel dispositif n'est en outre pas intrusif puisque l'utilisation d'un unique capteur thermique, équivalent à un capteur mono-pixel, ne permet pas l'observation de la pièce équipée du dispositif. En effet, un tel capteur thermique a par exemple une plage angulaire de détection (mesurée entre les deux angles d'incidence pour lesquels l'intensité détectée vaut 50% de l'intensité détectée dans l'axe du capteur thermique) supérieure à 60°. Le capteur thermique est ainsi sensible au rayonnement infrarouge reçu sur toute cette plage angulaire ; l'ensemble du rayonnement reçu sur cette plage angulaire contribue donc à l'établissement de la différence de température mesurée.

Lorsque le capteur thermique est un capteur à thermocouple, la température de référence est la température de soudure froide du thermocouple (ou d'une thermopile formée d'une pluralité de thermocouples) et la température de la partie exposée au rayonnement infrarouge est la température de soudure chaude du thermocouple (ou de la thermopile).

En variante, le capteur thermique pourrait être un bolomètre. En effet, un bolomètre permet également d'évaluer une différence de température entre une température de référence (en général la température d'un substrat) et une partie exposée au rayonnement infrarouge par la mesure d'une grandeur électrique.

Selon l'invention :
- le module est conçu pour déterminer un seuil adaptatif en fonction desdites valeurs relevées et pour déterminer l'indication de présence par comparaison d'une valeur courante de ladite différence au seuil adaptatif ;
- le module est conçu pour déterminer une variance desdites valeurs relevées et pour déterminer l'indication de mouvement par comparaison de la variance déterminée à un seuil prédéfini ;

Selon des caractéristiques optionnelles et non limitatives :
- le module est conçu pour estimer au moins une information descriptive du sommeil de la personne en fonction de l'indication de mouvement ;
- le dispositif comprend un socle présentant une paroi avant ;
- le capteur thermique est positionné dans un support solidaire du socle de sorte qu'un axe optique du capteur thermique a une orientation prédéfinie par rapport à une direction perpendiculaire à la paroi avant du socle ;
- l'écart angulaire entre l'axe optique et la direction perpendiculaire est supérieur à 50° ;
- le capteur thermique est situé dans une ouverture de la paroi avant du socle ;
- le dispositif comprend un boîtier destiné à être monté sur une paroi verticale ;
- l'axe optique a une inclinaison vers le bas comprise entre 45° et 70° par rapport à un plan horizontal contenant ladite direction perpendiculaire en position montée du boîtier.

L'invention propose également un procédé de détermination d'une indication de présence et d'une indication de mouvement selon la revendication 9. Le procédé comprend les étapes suivantes :
- génération de signaux indicatifs d'une différence entre une température de référence et une température d'une partie exposée à un rayonnement infrarouge par un (unique) capteur thermique ;
- détermination de l'indication de présence et de l'indication de mouvement en fonction seulement d'une pluralité de valeurs de ladite différence relevées sur un intervalle de temps.

L'étape de détermination de l'indication de présence et de l'indication de mouvement comprend les sous-étapes suivantes :
- détermination d'un seuil adaptatif en fonction desdites valeurs relevées ;
- détermination de l'indication de présence par comparaison d'une valeur courante de ladite différence au seuil adaptatif.

L'étape de détermination de l'indication de présence et de l'indication de mouvement comprend les sous-étapes suivantes :
- détermination d'une variance desdites valeurs relevées ;
- détermination de l'indication de mouvement par comparaison de la variance déterminée à un seuil prédéfini.

### DESCRIPTION DETAILLEE D'EXEMPLES DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente un boîtier de détection incorporant un capteur à thermocouple conformément aux enseignements de l'invention ;
- la figure 2 est une vue en perspective éclatée du boîtier de détection de la figure 1 ;
- la figure 3 représente une variante de réalisation du boîtier de détection ;
- la figure 4 est un schéma illustrant les principaux composants électriques du boîtier de détection de la figure 1 ;
- la figure 5 représente un exemple d'utilisation du boîtier de détection dans une applique murale ;
- la figure 6 représente schématiquement la configuration d'une pièce où est implanté le boîtier de détection, dans un plan vertical contenant l'axe optique du capteur à thermocouple ;
- la figure 7 est une section dans un plan horizontal de la pièce représentée sur la figure 6 ;
- la figure 8 représente un algorithme de détermination d'un seuil adaptatif et de détection de présence au moyen du boîtier de détection ;
- la figure 9 représente un algorithme d'évaluation de la qualité de sommeil au moyen du boîtier de détection ;
- la figure 10 représente un exemple de mesures effectuées par le boîtier de détection et de traitements réalisés par l'algorithme d'évaluation de la figure 9.

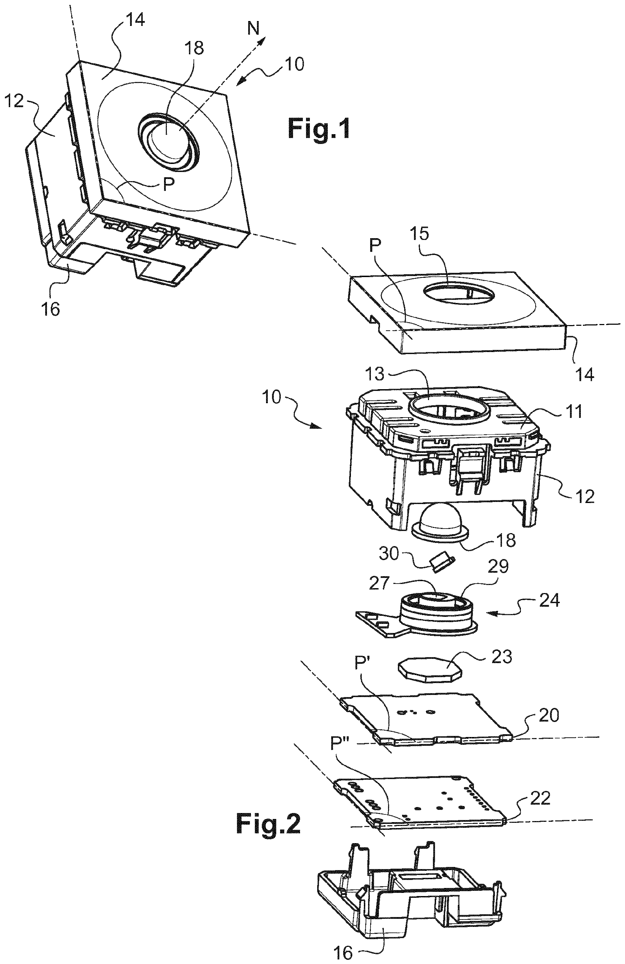

Les figures 1 et 2 représentent un boîtier de détection 10 utilisant un capteur à thermocouple 30.

Le boîtier de détection 10 comporte un socle 12 de forme générale parallélépipédique dont une paroi avant 11 présente en son centre une ouverture circulaire 13.

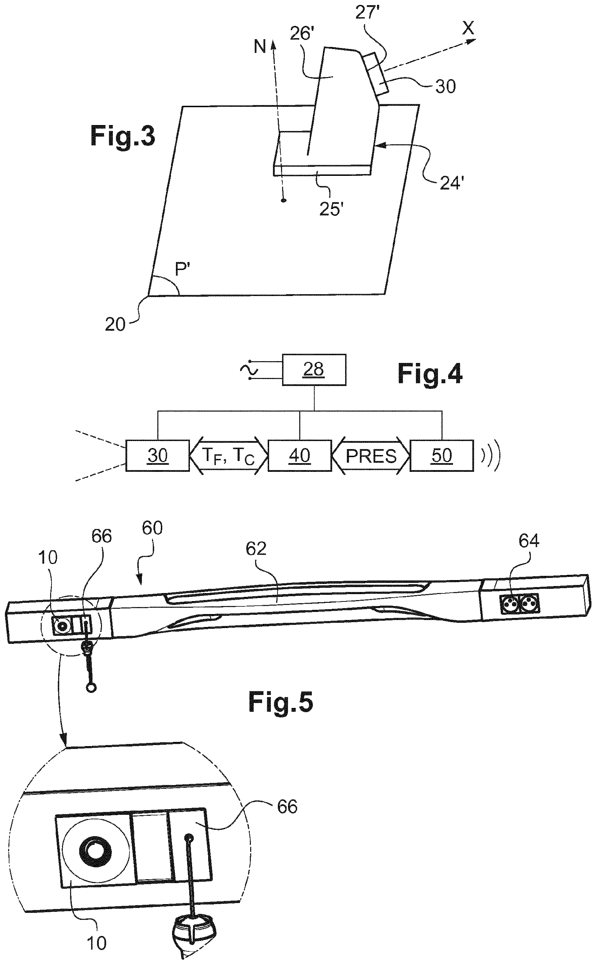

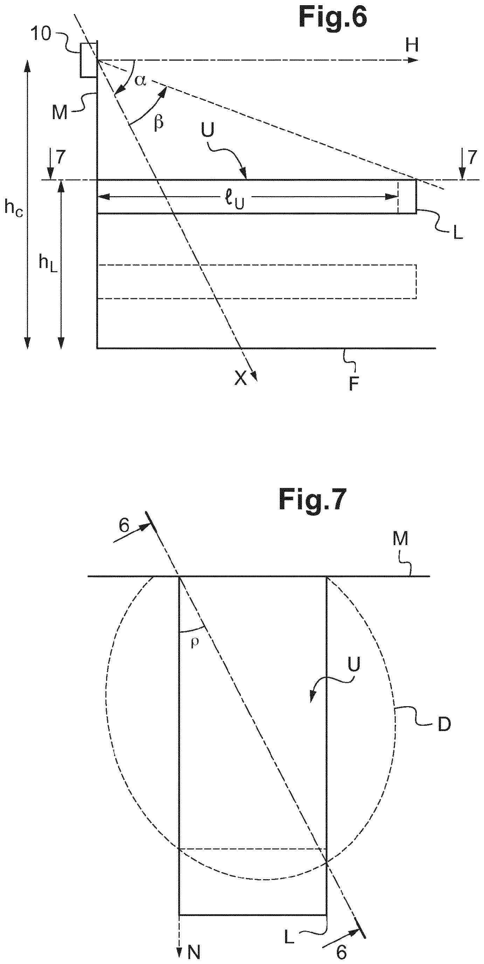

Comme expliqué plus en détail dans la suite, le boîtier de détection 10 est destiné à être monté dans une pièce sur une paroi verticale (mur M en figure 6), éventuellement par l'intermédiaire d'une applique (référencée 60 en figure 5) ; on entend donc par "*face avant*" la face (verticale) du boîtier de détection 10 tournée vers la pièce et par "*face arrière*" la face (verticale) du boîtier de détection tournée vers la paroi verticale, lorsque le boîtier de détection 10 est monté sur la paroi verticale.

La paroi avant 11 est recouverte par un capot avant 14 dont les deux plus grandes dimensions s'étendent (ici en forme de carré) dans un plan P. Lorsque le boîtier de détection est monté sur une paroi verticale, le plan P d'extension générale du capot avant 14 est vertical, ici parallèle à la paroi avant 11 et à la paroi verticale.

On peut ainsi définir une direction N perpendiculaire au plan P d'extension générale du capot avant 14, et donc également à la paroi avant 11. Lorsque le boîtier 10 est monté sur une paroi verticale, la direction N est essentiellement horizontale et s'étend vers l'avant à partir du boîtier de détection 10.

Le capot avant 14 présente une ouverture circulaire 15 située, lorsque le capot avant 14 est monté sur le socle 12, au niveau de l'ouverture circulaire 13 du socle 12.

Le socle 12 est évidé de manière à recevoir un ou plusieurs circuit(s) imprimé(s). Dans l'exemple décrit ici, le socle 12 porte deux circuits imprimés 20, 22. Le plan général d'extension P', P" de chaque circuit imprimé 20, 22 est substantiellement parallèle à la paroi avant 11 et donc au plan P d'extension générale du capot avant 14. La direction N est donc également perpendiculaire au plan général d'extension P', P" de chaque circuit imprimé.

Le socle 11 est fermé à l'arrière par un capot arrière 16.

Le capteur à thermocouple 30 est monté sur un support 24 (ici globalement cylindrique), lui-même monté (ici par l'intermédiaire d'un circuit imprimé 23) sur un circuit imprimé 20, en l'occurrence le circuit imprimé situé le plus à l'avant de sorte que le capteur à thermocouple 30 est situé au droit des ouvertures circulaires 13, 15 respectivement formées dans la paroi avant 11 du socle 12 et dans le capot avant 14.

Précisément, le capteur à thermocouple 30 est positionné dans un évidement 27 formé dans une face avant du support 24 de manière à ce que l'axe optique X du capteur à thermocouple 30 soit dans une direction d'orientation prédéterminée par rapport à la direction N perpendiculaire au plan général d'extension P' du circuit imprimé 20 (définie ci-dessus), comme expliqué ci-après en référence aux figures 6 et 7.

Afin de pouvoir détecter une présence humaine ou un mouvement humain dans une zone bien localisée (*i*.*e*. suffisamment restreinte) à proximité de la paroi verticale dans laquelle est monté le boîtier de détection 10, comme expliqué ci-après dans le cas d'un lit placé contre la paroi verticale, on prévoit par exemple un écart angulaire entre l'axe optique X et la direction N compris entre 50° et 75° ; cet écart angulaire vaut 66° dans l'exemple décrit ci-après.

Le capteur à thermocouple 30 est ici un capteur à thermocouple numérique comprenant une thermopile, une thermistance et un circuit intégré à application spécifique (ou ASIC pour "*Application Specific Integrated Circuit*"). Le circuit intégré à application spécifique gère l'alimentation de la thermopile et de la thermistance, mesure les grandeurs électriques (notamment la tension de la thermopile) et délivre une information T_{F} qui représente la température de la soudure froide de la thermopile (température de référence mesurée par la thermistance) et une information T_{C} qui représente la température de la soudure chaude, influencée par le rayonnement infrarouge reçu dans l'angle solide de mesure, ou champ de détection D du capteur à thermocouple 30 (visible en figure 7).

On rappelle que la tension de la thermopile est indicative de la différence ΔT entre la température de la soudure froide T_{F} et la température de la soudure chaude T_{C} (qui correspond à la température moyenne rayonnée par les objets environnants situés dans le champ de détection D). Pour obtenir la température de la soudure chaude T_{C}, le circuit intégré à application spécifique procède à la somme de la température de la soudure froide T_{F} (mesurée par la thermistance) et de la différence ΔT (mesurée par la thermopile).

Dans le mode de réalisation décrit, le capteur à thermocouple 30 est recouvert par un cache 18 transparent au rayonnement infrarouge, ici de forme hémisphérique et monté dans une rainure circulaire 29 formée dans la face supérieure du support 24 autour de l'évidement 27, de sorte à fermer l'ouverture circulaire 13 formée dans la paroi avant 11 du socle 12. Le cache 18 assure ainsi la protection (mécanique) du capteur à thermocouple 30 tout en laissant passer le rayonnement (infrarouge) mesuré par le capteur à thermocouple 30. Le cache 18 peut en revanche être opaque ou semi-opaque pour les rayonnements visibles afin de masquer à l'observateur humain l'intérieur du boîtier de détection 10.

La figure 3 représente une variante envisageable pour le montage du capteur à thermocouple 30 sur le circuit imprimé 20.

Selon cette variante, le capteur à thermocouple 30 est monté sur le circuit imprimé 20 au moyen d'un support 24' qui comprend une base 25' en forme de plaque et un corps 26' qui s'étend à partir de la base 25' et comporte une ouverture 27' de réception du capteur à thermocouple 30.

La base 25' est montée au contact du circuit imprimé 20 et s'étend alors parallèlement au circuit imprimé 20. Le corps 26' est conformé de sorte que, lorsque le capteur à thermocouple 30 est monté dans l'ouverture 27', l'axe optique X du capteur à thermocouple 30 à une orientation prédéterminée par rapport à la direction N perpendiculaire au plan général d'extension P' du circuit imprimé 20, comme expliqué plus loin en référence aux figures 6 et 7.

La figure 4 représente les principaux composants électriques du boîtier de détection 10. Chaque composant est monté sur l'un ou l'autre des circuits imprimés 20, 22.

Un circuit d'alimentation 28 reçoit une tension en entrée, par exemple une tension secteur, et génère en sortie une tension continue adaptée à l'alimentation électrique du capteur à thermocouple 30, d'un microcontrôleur 40 et d'un module de communication 50.

On pourrait naturellement prévoir en variante que le circuit d'alimentation 28 reçoive en entrée une tension continue, et joue alors un simple rôle d'adaptation du niveau de tension. Par ailleurs, bien que dans l'exemple décrit une même tension en sortie est appliquée aux différents composants électroniques, on peut prévoir en variante que le circuit d'alimentation 28 alimente chaque composant électronique avec une tension spécifique.

Le microcontrôleur 40 comprend notamment un microprocesseur, une mémoire non volatile (par exemple une mémoire morte ou une mémoire non volatile réinscriptible telle qu'une EEPROM) et une mémoire vive.

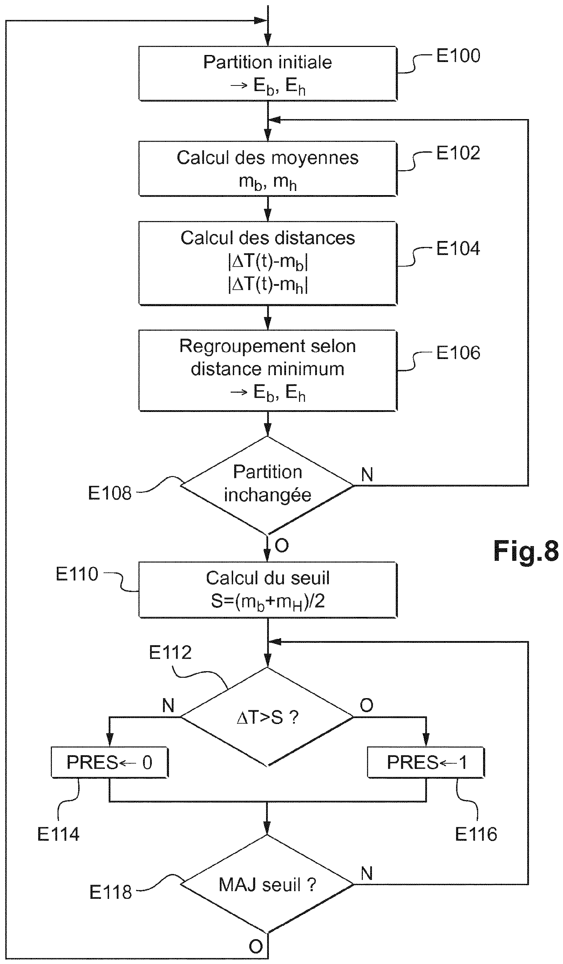

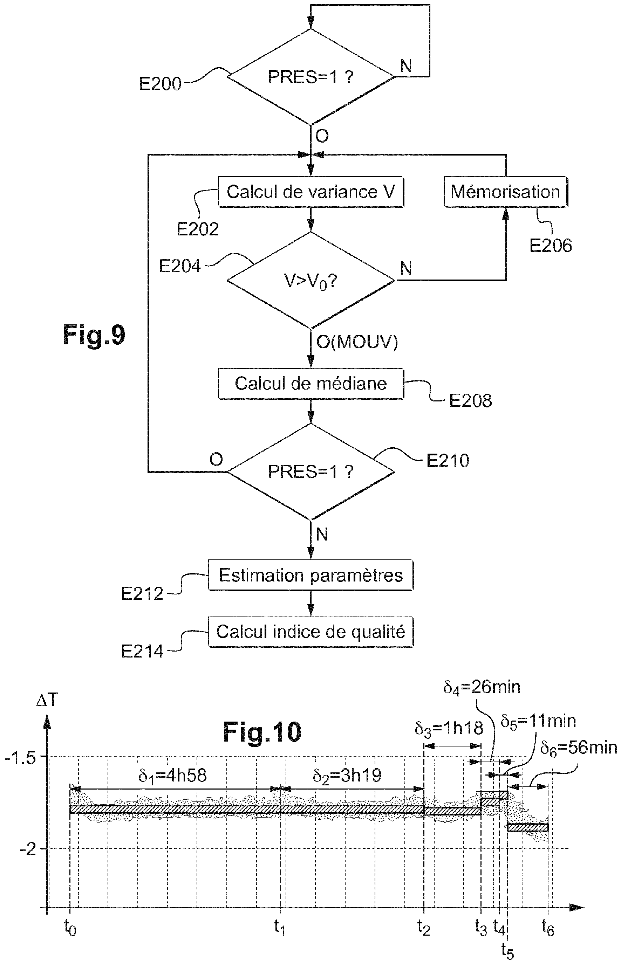

L'une des mémoires au moins (par exemple la mémoire non volatile) mémorise des instructions de programme d'ordinateur qui, lorsqu'elles sont exécutées par le microprocesseur, permet la mise en œuvre de procédés, notamment les procédés décrits ci-après en référence aux figures 8 et 9.

Le capteur à thermocouple 30 et le microcontrôleur 40 échangent des données, par exemple à travers un bus de données, notamment des données représentatives de la température de la soudure froide T_{F} et de la température de la soudure chaude T_{C} fournies par le capteur à thermocouple 30 comme expliqué plus haut.

On remarque que le boîtier de détection 10 comprend donc un unique capteur à thermocouple 30, qui inclut lui-même une unique thermopile constituée par la mise en série de plusieurs dizaines de thermocouples élémentaires afin d'accroître la sensibilité du capteur.

Dans l'exemple décrit ici, le boîtier de détection 10 comprend également comme déjà indiqué un module de communication 50, ici un module de communication sans fil permettant l'échange de données avec un autre dispositif électronique à travers une liaison radio. En variante, on pourrait utiliser un module de communication utilisant une technologie filaire. Selon une autre variante, on pourrait utiliser en lieu et place du module de communication 50 une interface de connexion, par exemple une interface de connexion à un périphérique de stockage.

Différentes données (notamment un indicateur de présence PRES) produites au cours de la mise en œuvre des procédés décrits ci-dessous au moyen du microprocesseur du microcontrôleur 40, peuvent ainsi être transmises à un autre dispositif électronique (au moyen du module de communication 50) ou mémorisées (dans le périphérique de stockage).

La figure 5 représente une applique murale 60 équipée du boîtier de détection 10 des figures 1 et 2.

L'applique murale 60 comprend un luminaire 62 dans sa région centrale, des prises électriques 64 dans une première région d'extrémité (à droite de la région centrale sur la figure 5), et un ensemble regroupant le boîtier de détection 10 et un dispositif d'actionnement (ici un interrupteur à tirette 66) dans une seconde région d'extrémité (à gauche de la région centrale sur la figure 5) située à l'opposé de la première région d'extrémité.

Le dispositif d'actionnement permet par exemple la commande du luminaire 62.

L'applique murale 60 est destinée à être fixée au-dessus d'un lit, par exemple dans une chambre d'hôpital, comme décrit ci-après en référence aux figures 6 et 7. Le boîtier de détection 10 peut également être monté, par l'intermédiaire d'une applique murale ou directement, dans une cloison d'une chambre de manière à être située au-dessus d'un lit, par exemple dans une habitation ou un hôtel.

La figure 6 représente schématiquement le positionnement d'un lit L dans une pièce, dans un plan vertical de section 6-6 visible en figure 7 (qui contient l'axe optique X du capteur à thermocouple 30).

La figure 7 représente schématiquement le lit L en section dans un plan horizontal 7-7 défini en figure 6.

Comme visible en figure 6, la hauteur h_{L} du lit L (précisément de la face supérieure du matelas, sur laquelle une personne peut s'allonger) par rapport au sol F est variable, entre un minimum (par exemple 50 cm, position du lit L représentée en pointillés) et un maximum (par exemple 1 m).

Une extrémité du lit L est au contact du mur M sur lequel est monté le boîtier de détection 10 (ici par l'intermédiaire de l'applique 60). On considère ici que le boîtier de détection 10 est monté au droit d'un bord du lit L, en l'occurrence le bord gauche (en regardant face au mur de l'extrémité du lit L opposée à son extrémité au contact du mur M).

Le boîtier de détection 10 est monté au-dessus du lit L, à une hauteur h_{C} par rapport au sol F comprise entre 1,5 m et 2 m, ici 1,7 m.

Afin que le capteur à thermocouple 30 puisse mesurer le rayonnement infrarouge éventuellement émis par une personne allongée dans le lit L, on prévoit qu'une zone utile U de la face supérieure du matelas du lit L soit située dans le champ de détection D du capteur à thermocouple 30, comme visible en figure 7.

La zone utile U s'étend par exemple sur toute la largeur du lit L et sur une longueur l_{U} inférieure à la longueur du lit L à partir du mur M. La longueur l_{U} de la zone utile U est par exemple comprise entre 1,5 m et 1,8 m et vaut ici 1,6 m. En effet, la zone d'extrémité du lit L située à l'opposé du mur M (zone située en dehors de la zone utile U) est en général peu utilisée (ou utilisée par les pieds qui rayonnent peu car généralement occultés par des draps et couvertures) et il est donc inutile de chercher à ce que cette zone soit nécessairement dans le champ de détection D du capteur à thermocouple 30.

Le champ de détection D (défini par exemple par l'ensemble de points pour lesquels l'intensité détectée est d'au moins 50% de l'intensité détectée dans l'axe) est ici un cône de détection de demi-angle au sommet β, avec β = 42°, soit une plage angulaire de détection de 84°.

Afin que la zone utile U soit entièrement située dans le champ de détection D même lorsque le lit L est dans sa position la plus haute (représentée en figure 6, avec h_{L} = 1 m), on prévoit que l'axe optique X du capteur à thermocouple 30 soit dans une orientation prédéterminée définie par un azimut ρ (angle entre la direction N perpendiculaire au mur M et la projection de l'axe optique X dans un plan horizontal) et une inclinaison α (angle entre l'axe optique X et le plan horizontal H) vers le bas.

On prévoit par exemple que l'azimut ρ soit compris entre 25° et 40°, ici ρ = 33°, et que l'inclinaison α (vers le bas) soit comprise entre 45° et 70°, ici α = 62°. Dans ces plages de valeurs, l'écart angulaire entre la direction N et l'axe optique X varie comme déjà indiqué entre 50° et 75°, et vaut ici 66° (pour ρ = 33° et α = 62°).

La figure 8 représente un procédé mis en œuvre par le microcontrôleur 40 afin de détecter la présence d'une personne dans le lit L en fonction des informations de température délivrées par le capteur à thermocouple 30. Le boîtier de détection 10 fonctionne alors comme un capteur de présence, ici un capteur d'alitement.

On remarque que ce procédé utilise la différence ΔT entre la température de la soudure froide T_{F} et la température de la soudure chaude T_{c}. Dans l'exemple décrit ici, le microcontrôleur 40 reçoit une information représentative de la température de la soudure froide T_{F} et une information représentative de la température de la soudure chaude T_{c}, et détermine donc la différence ΔT sur la base de ces informations. En variante, on pourrait utiliser un capteur à thermocouple 30 qui délivre directement une information indicative de la différence ΔT (mesurée par la thermopile).

Comme cela ressortira de l'exemple décrit ci-dessous, le procédé de détection de présence utilise un seuil adaptatif S déterminé en fonction de valeurs antérieures de la différence ΔT ; on considère alors qu'une personne est présente dans le champ de détection D (c'est-à-dire dans le lit L) lorsque la valeur courante de la différence ΔT est supérieure au seuil S.

Le procédé de la figure 8 utilise un ensemble de valeurs (formant autant d'échantillons) de la différence ΔT(t) respectivement relevées à une pluralité d'instants t régulièrement espacés sur un intervalle de temps donné, par exemple d'une durée de 1 journée (24 h).

Le procédé débute à l'étape E100 en effectuant une partition initiale de cet ensemble d'échantillons ΔT(t) en deux sous-ensembles (ou partitions) E_{b}, Eₕ, le sous-ensemble E_{b} regroupant les échantillons ayant les valeurs les plus basses (par exemple la moitié des échantillons ayant les valeurs les plus basses) et le sous-ensemble Eₕ regroupant les échantillons ayant les valeurs les plus hautes (par exemple l'autre moitié des échantillons).

On procède alors, comme expliqué dans la suite (étapes E102 à E108), à un algorithme des k-moyennes (ou "*k-means*" d'après l'appellation anglo-saxonne) qui permet d'aboutir à une répartition des échantillons ΔT(t) dans deux ensembles construits en sorte que, pour chaque échantillon ΔT(t), la valeur de l'échantillon concerné soit plus proche de la moyenne de l'ensemble auquel il appartient que de la moyenne de l'autre ensemble.

On calcule tout d'abord les moyennes m_{b}, mₕ des valeurs ΔT(t) des échantillons respectivement dans les ensembles E_{b}, Eₕ (étape E102).

On calcule ensuite à l'étape E104, pour chaque échantillon ΔT(t), d'une part la distance d1_{ΔT(t)} à la moyenne m_{b} et d'autre part la distance d2_{ΔT(t)} à la moyenne mₕ :
d1_{ΔT(t)} = | ΔT(t) - m_{b} |, d2_{ΔT(t)} = | ΔT(t) - mₕ |, où | x | est la valeur absolue de x.

On reconstruit alors à l'étape E106 les sous-ensembles E_{b}, Eₕ comme suit : le sous-ensemble E_{b} contient les échantillons ΔT(t) pour lesquels la distance d1_{ΔT(t)} est minimum (*i*.*e*. d1_{ΔT(t)}<d2_{ΔT(t)}) et le sous-ensemble Eₕ contient les échantillons ΔT(t) pour lesquels la distance d2_{ΔT(t)} est minimum (*i*.*e*. d2_{ΔT(t)}<d1_{ΔT(t)}). (On associe par exemple en outre au sous-ensemble E_{b} les échantillons ΔT(t) pour lesquels d1_{ΔT(t)}=d2_{ΔT(t)}.)

Si le procédé détermine à l'étape E108 que cette nouvelle répartition des échantillons ΔT(t) dans les sous-ensembles E_{b}, Eₕ est différente de la répartition précédente, les moyennes m_{b}, mₕ peuvent encore évoluer et le procédé boucle alors à l'étape E102.

S'il est au contraire déterminé à l'étape E108 que la répartition des échantillons ΔT(t) dans les sous-ensembles E_{b}, Eₕ est inchangée, on peut procéder à l'étape E110 au calcul du seuil adaptatif S en fonction de la moyenne m_{b} et de la moyenne mₕ, par exemple comme le point milieu entre la moyenne m_{b} et la moyenne mₕ : S = (m_{b} + mₕ)/2.

On considère en effet que la moyenne basse m_{b} est représentative d'une valeur de la différence ΔT en l'absence d'une personne dans le champ de détection D, c'est-à-dire ici dans le lit L, tandis que la moyenne haute mₕ est représentative d'une valeur de la différence en présence d'un personne dans le champ de détection D, c'est-à-dire ici dans le lit L. Le seuil S situé entre ces deux moyennes permet de distinguer les deux situations.

On peut alors comparer à l'étape E112 la valeur courante de la différence ΔT au seuil S déterminé à l'étape E110 : si la valeur courante de la différence ΔT est supérieure au seuil S, on considère qu'une personne est présente dans le lit L et on met à la valeur 1 l'indicateur de présence PRES (étape E116). Au contraire, si la valeur courante de la différence ΔT est inférieure (ou égale) au seuil S, on met à la valeur 0 l'indicateur de présence PRES (étape E114).

L'indicateur de présence PRES peut alors être envoyé à un dispositif électronique distant au moyen du module de communication 50 (ou en variante mémorisé dans un périphérique de stockage).

Le procédé se poursuit par ailleurs à l'étape E118 à laquelle on détermine si une mise à jour du seuil S est nécessaire. Une mise à jour du seuil adaptatif S est par exemple effectuée périodiquement (par exemple toutes les heures), ce qui permet de tenir compte de variations de l'environnement de la pièce (ouverture/fermeture d'une fenêtre, mise en fonctionnement/hors fonctionnement du chauffage, etc.) susceptibles de perturber les mesures.

Si une mise à jour du seuil S n'est pas requise, on peut procéder à une nouvelle détection de présence à l'étape E112 (éventuellement après une temporisation prédéterminée afin que la détection de présence ait lieu avec une périodicité prédéfinie, avec une période par exemple comprise entre 1 min et 5 min, ou, de manière plus générale, inférieure à la période de mise à jour du seuil adaptatif).

Si une mise à jour du seuil S est nécessaire, le procédé boucle à l'étape E100 afin de déterminer une nouvelle valeur du seuil adaptatif S en fonction des valeurs précédentes de la différence ΔT, y compris certaines au moins des valeurs prises par la différence ΔT depuis le précédent calcul du seuil adaptatif S.

La figure 9 représente un procédé mis en œuvre par le microcontrôleur 40 afin de déterminer un indice de qualité de sommeil d'une personne couchée dans le lit L en fonction des informations de température délivrées par le capteur à thermocouple 30. Le boîtier de détection 10 fonctionne alors comme un capteur de qualité de sommeil.

La figure 10 illustre en tant qu'exemple des valeurs de la différence ΔT relevées au cours d'une nuit et traitées par le procédé de la figure 9.

Ce procédé débute à l'étape E200 à laquelle le procédé teste un indicateur de présence PRES, obtenu par exemple au moyen du procédé de la figure 8. L'étape E200 boucle sur elle-même tant que l'indicateur de présence ne vaut pas 1, et renvoie à l'étape E202 lorsque l'indicateur de présence vaut 1 (c'est-à-dire lorsqu'une personne se couche dans le lit L).

On comprend que, dans l'exemple décrit ici où le procédé de la figure 9 utilise l'indicateur obtenu au moyen du procédé de la figure 8, ces deux procédés sont mises en œuvre en parallèle.

Lorsque le coucher d'une personne est détecté (indicateur de présence PRES à 1 à l'étape E200), ce qui se produit au temps t₀ dans l'exemple représenté en figure 10, le procédé détermine à l'étape E202 la variance V du signal ΔT (ΔT étant comme déjà indiqué la différence entre la température de la soudure froide T_{F} et la température de la soudure chaude T_{c}) sur un intervalle de temps de durée prédéterminée, comprise par exemple entre 1 s et 10 s, ici de 5 s.

L'utilisation d'un tel intervalle de temps permet de prendre en compte les mouvements significatifs de la personne (qui sont effectifs sur des durées de l'ordre de la seconde), sans perturbation par d'éventuelles variations de l'environnement thermique (qui se produisent sur des durées de l'ordre de la minute ou plus).

On détermine ensuite à l'étape E204 si la variance V déterminée à l'étape E202 est supérieure à un seuil V₀, auquel cas on considère qu'un mouvement de la personne allongée dans le lit L a été détecté (comme aux instants t₁ à t₆ dans l'exemple de la figure 10) : une indication de mouvement MOUV a été déterminée ; on procède de ce fait à l'étape E208 décrite plus bas.

Si la variance déterminée à l'étape E202 ne dépasse le seuil V₀, l'étape E204 renvoie en revanche à l'étape E206 où les valeurs du signal ΔT sur l'intervalle de temps de durée prédéterminée sont mémorisées (par exemple dans la mémoire vive du microcontrôleur 40). Le procédé boucle ensuite à l'étape E202 pour calcul d'une nouvelle valeur de la variance V sur l'intervalle de temps suivant.

Lorsqu'un mouvement est détecté à l'étape E204, le procédé détermine à l'étape E208 la valeur médiane du signal ΔT sur l'ensemble des échantillons relevés depuis la précédente détection de mouvement, c'est-à-dire l'ensemble des valeurs mémorisées à l'étape E206 et des valeurs relevées au cours du dernier intervalle de temps de durée prédéterminée. L'utilisation de la valeur médiane (plutôt que la valeur moyenne) permet d'éviter une influence trop importante des valeurs extrêmes, dues en général à des perturbations.

La valeur médiane est par exemple mémorisée (ici dans la mémoire vive) en tant que valeur représentative de la différence ΔT pour le segment temporel compris entre la détection de mouvement courante et la précédente détection de mouvement (segments tᵢ₋₁ - tᵢ en figure 10, avec i=1,...,6). On peut ainsi effacer de la mémoire vive les valeurs successives du signal ΔT précédemment mémorisées à l'étape E206.

On peut en outre mémoriser des caractéristiques du segment temporel tᵢ₋₁ - tᵢ, typiquement l'heure de début tᵢ₋₁ et/ou l'heure de fin tᵢ et/ou la durée δᵢ.

L'étape E208 est suivie de l'étape E210 à laquelle on teste l'indicateur de présence PRES déterminé en parallèle par le procédé de la figure 8, comme expliqué ci-dessus.

Si l'indicateur de présence PRES vaut 1, la personne ne s'est pas levée et le procédé boucle alors à l'étape E202 pour traitement d'un nouvel segment temporel tᵢ - tᵢ₊₁. C'est ce qui se produit aux instants t₁ à t₅ dans l'exemple de la figure 10.

Si l'indicateur de présence PRES vaut 0, il est considéré à l'étape E210 que le mouvement dernièrement détecté correspond au lever de la personne, ce qui se produit à l'instant t₆ dans l'exemple de la figure 10.

Le procédé se poursuit dans ce cas à l'étape E212 par l'estimation de divers paramètres, à partir notamment des instants de détection de mouvement tᵢ et des durées δᵢ des segments temporels, ces instant tᵢ et ces durées δᵢ ayant été déterminés et mémorisés au cours du procédé qui vient d'être décrit. Ces paramètres sont par exemple la durée de sommeil profond Dp et la durée de sommeil léger D_{L}.

On procède alors à l'étape E214 au calcul d'un indice synthétique Q de qualité de sommeil, par exemple sur la base de la durée de sommeil profond Dp et de la durée de sommeil léger D_{L}, ici selon la formule Q = D_{P}/(D_{P} + D_{L}), l'indice Q pouvant dans ce cas être exprimé sous forme d'un pourcentage.

On remarque que les comportements durant la nuit peuvent varier d'une personne à l'autre et que les paramètres estimés à l'étape E212 et/ou l'indice de qualité de sommeil calculé à l'étape E214 peuvent tenir compte d'autres éléments, tel que par exemple un historique des paramètres estimés pour la personne au cours de précédents relevés.

## Revendications

1. Dispositif de détection de rayonnement infrarouge comprenant un capteur thermique (30) générant des signaux (T_{F}, T_{C}) indicatifs d'une différence (ΔT) entre une température de référence (T_{F}) et une température d'une partie exposée au rayonnement infrarouge (T_{C}),
comprenant un module (40) de détermination d'une indication de présence (PRES) et d'une indication de mouvement (MOUV) en fonction seulement d'une pluralité de valeurs de ladite différence (ΔT) relevées sur un intervalle de temps,
dans lequel le module est conçu pour déterminer un seuil adaptatif (S) en fonction desdites valeurs relevées et pour déterminer l'indication de présence (PRES) par comparaison (E112) d'une valeur courante de ladite différence (ΔT) au seuil adaptatif (S), et
dans lequel le module est conçu pour déterminer une variance (V) desdites valeurs relevées et pour déterminer l'indication de mouvement (MOUV) par comparaison (E204) de la variance déterminée (V) à un seuil prédéfini (V₀).

2. Dispositif de détection selon la revendication 1, dans lequel le capteur thermique est un capteur à thermocouple (30), dans lequel la température de référence est une température de soudure froide (T_{F}) et dans lequel la température de ladite partie est une température de soudure chaude (T_{C}).

3. Dispositif de détection selon la revendication 1 ou 2, dans lequel le capteur thermique (30) a une plage angulaire de détection supérieure à 60°.

4. Dispositif de détection selon l'une des revendications 1 à 3, dans lequel le module est conçu pour estimer au moins une information descriptive du sommeil en fonction de l'indication de mouvement.

5. Dispositif de détection selon l'une des revendications 1 à 4, comprenant un socle (12) présentant une paroi avant (11), dans lequel le capteur thermique (30) est positionné dans un support (24 ; 24') solidaire du socle (12) de sorte qu'un axe optique (X) du capteur thermique (30) a une orientation prédéfinie par rapport à une direction (N) perpendiculaire à la paroi avant (11) du socle (12).

6. Dispositif de détection selon la revendication 5, dans lequel l'écart angulaire entre l'axe optique (X) et la direction perpendiculaire (N) est supérieur à 50°.

7. Dispositif de détection selon la revendication 5 ou 6, dans lequel le capteur thermique (30) est situé dans une ouverture (13) de la paroi avant (11) du socle (12).

8. Dispositif de détection selon l'une des revendications 5 à 7, comprenant un boîtier (10) destiné à être monté sur une paroi verticale, dans lequel l'axe optique (X) a une inclinaison vers le bas comprise entre 45° et 70° par rapport à un plan horizontal (H) contenant ladite direction perpendiculaire (N) en position montée du boîtier (10).

9. Procédé de détermination d'une indication de présence (PRES) et d'une indication de mouvement (MOUV) comprenant les étapes suivantes :
- génération de signaux (T_{F}, T_{C}) indicatifs d'une différence (ΔT) entre une température de référence (T_{F}) et une température d'une partie exposée à un rayonnement infrarouge (T_{C}) par un capteur thermique (30) ;
- détermination de l'indication de présence (PRES) et de l'indication de mouvement (MOUV) en fonction seulement d'une pluralité de valeurs de ladite différence relevées (ΔT) sur un intervalle de temps,
dans lequel l'étape de détermination de l'indication de présence (PRES) et de l'indication de mouvement (MOUV) comprend les sous-étapes suivantes :
- détermination (E100, E102, E104, E106, E108, E110) d'un seuil adaptatif (S) en fonction desdites valeurs relevées ;
- détermination (E112, E114, E116) de l'indication de présence (PRES) par comparaison (E112) d'une valeur courante de ladite différence (ΔT) au seuil adaptatif (S), et
dans lequel l'étape de détermination de l'indication de présence (PRES) et de l'indication de mouvement (MOUV) comprend les sous-étapes suivantes :
- détermination (E202) d'une variance (V) desdites valeurs relevées ;
- détermination (E204) de l'indication de mouvement (MOUV) par comparaison de la variance déterminée (V) à un seuil prédéfini (V₀).

## Patentansprüche

1. Vorrichtung zur Erfassung von Infrarotstrahlung mit einem Wärmefühler (30), der Signale (T_{F}, T_{C}) erzeugt, die eine Differenz (ΔT) zwischen einer Bezugstemperatur (T_{F}) und einer Temperatur (T_{C}) eines der Infrarotstrahlung ausgesetzten Teils anzeigen,
mit einem Modul (40) zum Bestimmen einer Präsenzmeldung (PRES) und einer Bewegungsmeldung (MOUV) in alleiniger Abhängigkeit von einer in einem Zeitintervall festgestellten Anzahl Werte der besagten Differenz (ΔT),
wobei das Modul dazu ausgelegt ist, eine anpaßbare Schwelle (S) in Abhängigkeit von den festgestellten Werten zu bestimmen und die Präsenzmeldung (PRES) durch Vergleich (E112) eines laufenden Werts der besagten Differenz (ΔT) mit der anpaßbaren Schwelle (S) zu bestimmen, und
wobei das Modul dazu ausgelegt ist, eine Streuung (V) der festgestellten Werte zu bestimmen und die Bewegungsmeldung (MOUV) durch Vergleich (E204) der bestimmten Streuung (V) mit einer vorbestimmten Schwelle (V₀) zu bestimmen.

2. Erfassungsvorrichtung gemäß Anspruch 1, bei der der Wärmefühler ein Sensor (30) mit Thermoelement ist, bei der die Bezugstemperatur eine Vergleichsstellentemperatur (T_{F}) ist und bei der die Temperatur des Teils eine Meßstellentemperatur (Tc) ist.

3. Erfassungsvorrichtung gemäß Anspruch 1 oder 2, bei der der Wärmefühler (30) einen Erfassungswinkelbereich von mehr als 60° hat.

4. Erfassungsvorrichtung gemäß einem der Ansprüche 1 bis 3, bei der das Modul dazu ausgelegt ist, wenigstens eine beschreibende Information der Ruhe in Abhängigkeit von der Bewegungsmeldung abzuschätzen.

5. Erfassungsvorrichtung gemäß einem der Ansprüche 1 bis 4 mit einem Sockel (12), der eine Vorderwand (11) aufweist, wobei der Wärmefühler (30) in einem mit dem Sockel (12) fest verbundenen Träger (24; 24') derart angeordnet ist, daß eine optische Achse (X) des Wärmefühlers (30) eine vorbestimmte Ausrichtung in Bezug auf eine zur Vorderwand (11) des Sockels (12) senkrechte Richtung (N) hat.

6. Erfassungsvorrichtung gemäß Anspruch 5, bei der die Winkelabweichung zwischen der optischen Achse (X) und der senkrechten Richtung (N) größer als 50° ist.

7. Erfassungsvorrichtung gemäß Anspruch 5 oder 6, bei der der Wärmefühler (30) in einer Öffnung (13) der Vorderwand (11) des Sockels (12) angeordnet ist.

8. Erfassungsvorrichtung gemäß einem der Ansprüche 5 bis 7 mit einem Gehäuse (10), das dazu bestimmt ist, an einer senkrechten Wand angebracht zu werden, wobei die optische Achse (X) in der Einbaustellung des Gehäuses (10) gegenüber einer die senkrechte Richtung (N) enthaltenden horizontalen Ebene (H) eine nach unten gerichtete Neigung zwischen 45° und 70° hat.

9. Verfahren zur Bestimmung einer Präsenzmeldung (PRES) und einer Bewegungsmeldung (MOUV) mit den folgenden Schritten:
- Erzeugen von Signalen (T_{F}, T_{C}), die eine Differenz (ΔT) zwischen einer Bezugstemperatur (T_{F}) und einer Temperatur (T_{C}) eines einer Infrarotstrahlung ausgesetzten Teils anzeigen, durch einen Wärmefühler (30),
- Bestimmen der Präsenzmeldung (PRES) und der Bewegungsmeldung (MOUV) in alleiniger Abhängigkeit von einer in einem Zeitintervall festgestellten Anzahl Werte der besagten Differenz (ΔT),
wobei der Schritt des Bestimmens der Präsenzmeldung (PRES) und der Bewegungsmeldung (MOUV) die folgenden Unterschritte aufweist:
- Bestimmen (E100, E102, E104, E106, E108, E110) einer anpaßbaren Schwelle (S) in Abhängigkeit von den festgestellten Werten,
- Bestimmen (E112, E114, E116) der Präsenzmeldung (PRES) durch Vergleich (E112) eines laufenden Werts der besagten Differenz (ΔT) mit der anpaßbaren Schwelle (S), und
wobei der Schritt des Bestimmens der Präsenzmeldung (PRES) und der Bewegungsmeldung (MOUV) die folgenden Unterschritte aufweist:
- Bestimmen (E202) einer Streuung (V) der festgestellten Werte,
- Bestimmen (E204) der Bewegungsmeldung (MOUV) durch Vergleich der bestimmten Streuung (V) mit einer vorbestimmten Schwelle (V₀).

## Claims

1. A detector device for detecting infrared radiation, the device comprising:
· a temperature sensor (30) for generating signals (T_{F}, T_{c}) indicative of a difference (ΔT) between a reference temperature (T_{F}) and the temperature (T_{c}) of a portion exposed to the infrared radiation; and
· a determination module (40) for determining a presence indication (PRES) and a movement indication (MOUV) as a function solely of a plurality of reading values of said difference (ΔT) as taken over a time interval;
wherein the module is designed to determine an adaptive threshold (S) as a function of said reading values and to determine the presence indication (PRES) by comparing (E112) a current value of said difference (ΔT) with the adaptive threshold (S); and
wherein the module is designed to determine a variance (V) for said reading values and to determine the movement indication (MOUV) by comparing (E204) the determined variance (V) with a predefined threshold (V₀).

2. A detector device according to claim 1, wherein the temperature sensor is a thermocouple sensor (30) in which the reference temperature is the cold junction temperature (T_{F}) and in which the temperature of said portion is the hot junction temperature (T_{c}).

3. A detector device according to claim 1 or claim 2, wherein the temperature sensor (30) has an angular detection range greater than 60°.

4. A detector device according to any one of claims 1 to 3, wherein the module is designed to estimate information descriptive of sleep as a function of the movement indication.

5. A detector device according to any one of claims 1 to 4, comprising a base (12) presenting a front wall (11), wherein the temperature sensor (30) is positioned in a support (24; 24') secured to the base (12) in such a manner that the temperature sensor (30) has an optical axis (X) at a predefined orientation relative to a direction (N) perpendicular to the front wall (11) of the base (12).

6. A detector device according to claim 5, wherein the angular difference between the optical axis (X) and the perpendicular direction (N) is greater than 50°.

7. A detector device according to claim 5 or claim 6, wherein the temperature sensor (30) is situated in an opening (13) in the front wall (11) of the base (12).

8. A detector device according to any one of claims 5 to 7, including a housing (10) designed to be mounted on a vertical wall, wherein the optical axis (X) slopes downwards at an angle in the range 45° to 70° relative to a horizontal plane (H) containing said perpendicular direction (N) when the housing (10) is mounted in position.

9. A method of determining a presence indication (PRES) and a movement indication (MOUV), the method comprising the following steps:
· using a temperature sensor (30) to generate signals (T_{F}, T_{C}) indicative of a difference (ΔT) between a reference temperature (T_{F}) and the temperature (T_{C}) of a portion exposed to infrared radiation;
· determining the presence indication (PRES) and the movement indication (MOUV) as a function solely of a plurality of reading values of said difference (ΔT) as taken over a time interval;
wherein the step of determining the presence indication (PRES) and the movement indication (MOUV) comprises the following sub-steps:
· determining (E100, E102, E104, E106, E108, E110) an adaptive threshold (S) as a function of said reading values;
· determining (E112, E114, E116) the presence indication (PRES) by comparing (E112) a current value of said difference (ΔT) with the adaptive threshold (S); and
wherein the step of determining the presence indication (PRES) and the movement indication (MOUV) comprises the following sub-steps:
· determining (E202) a variance (V) for said reading values; and
· determining (E204) the movement indication (MOUV) by comparing the determined variance (V) with a predefined threshold (V₀).
